# EUROPEAN PATENT SPECIFICATION

(11) **EP 2 580 451 B1**
(45) Date of publication and mention of the grant of the patent: **25.12.2013**
(21) Application number: 11740984.7
(22) Date of filing: 09.06.2011
(51) Int. Cl.: F02D 41/00, F02D 41/14

(54) **METHOD AND APPARATUS FOR CONTROLLING A VARIABLE VALVE SYSTEM**
VERFAHREN UND VORRICHTUNG ZUM STEUERN EINES VARIABLEN VENTILSYSTEMS
PROCÉDÉ ET APPARAIL POUR CONTRÔLLER UN SYSTÈME DE SOUPAPE VARIABLE

(30) Priority: 10.06.2010 JP 2010132813
(43) Date of publication of application: 17.04.2013
(73) Proprietor: TOYOTA JIDOSHA KABUSHIKI KAISHA, Toyota-shi, Aichi-ken, 471-8571 (JP)
(72) Inventor: SHOGENJI, Yoshiyuki, Toyota-shi, Aichi-ken, 471-8571 (JP); ITO, Tokiji, Toyota-shi, Aichi-ken, 471-8571 (JP); TAKIMOTO, Fumito, Toyota-shi, Aichi-ken, 471-8571 (JP); HAYASHI, Kota, Toyota-shi, Aichi-ken, 471-8571 (JP)
(74) Representative: Albutt, Anthony John
(86) International application number: PCT/IB2011/001616
(87) International publication number: WO 2011/154837

(56) References cited:
- EP-A1- 1 669 560
- EP-A2- 1 703 091

## Description

### BACKGROUND OF THE INVENTION

### 1. Field of the Invention

The invention relates to a variable valve timing apparatus for an internal combustion engine, and a control method of that variable valve timing apparatus.

### 2. Description of the Related Art

One known variable valve timing apparatus for an internal combustion engine includes a variable valve timing mechanism that changes a valve characteristic of an engine valve such as an intake valve or an exhaust valve, an actuator that is driven within a predetermined driving range to operate the mechanism, and an electronic control unit that drivingly controls the actuator.

In such a variable valve timing apparatus, in order to precisely control the valve characteristic of the engine valve, it is extremely important to accurately detect the actual valve characteristic and operate the variable valve timing mechanism, i.e., drivingly control the actuator, such that the actual valve characteristic comes to match a target characteristic. The valve characteristic of an engine valve corresponds to the driving position of an actuator within the driving range, so one way to detect the actual valve characteristic of an engine valve is to provide a position sensor that detects the driving position of the actuator, and detect the actual valve characteristic of the engine valve using the driving position of the actuator detected by the position sensor. Incidentally, the driving position of the actuator detected by the position sensor (i.e., or more accurately, information related to the driving position) is stored in RAM of the electronic control unit. Then the information related to the driving position of the actuator that is stored in the RAM of the electronic control unit in this way is read from the RAM when necessary, such as when it is to be used to detect the actual valve characteristic of the engine valve.

However, the information related to the driving position of the actuator to be used to detect the valve characteristic of the engine valve does not necessarily always correspond to the actual driving position of the actuator. That is, there are times when it may be off from the actual driving position. For example, the information related to the driving position that is stored in the RAM of the electronic control unit may be lost and reset to the initial value as a result of a temporary interruption (a so-called an instantaneous interruption) in the supply of power to the electronic control unit temporarily or the like, or the content of the information may change. In this case, the information related to the driving position of the actuator that is detected by the position sensor, i.e., the driving position of the actuator that is stored in the RAM of the electronic control unit, will be inaccurate, so the valve characteristic of the engine valve that is detected based on this driving position information will also be inaccurate. As a result, if an attempt is made to control the valve characteristic of the engine valve to the target characteristic by driving the actuator based on the detected valve characteristic, this control will not be able to be performed correctly.

In order to solve this problem, an initialization process to match the driving position of the actuator detected by the position sensor with the actual driving position of the actuator is executed when a preset execution condition is satisfied. More specifically, this initialization process is executed according to steps 1 to 3 described below.

### [Step 1]

The actuator is driven to one end of the driving range, and information related to the driving position of the actuator stored in the RAM of the electronic control unit i.e., the driving position detected by the position sensor in this state, is set as an initial value.

### [Step 2]

The actuator is driven to the end opposite the one end of the driving range, and the amount that the driving position of the actuator detected by the position sensor in this state is offset from an optimum value is obtained.

### [Step 3]

The amount that the detected driving position of the actuator is offset from the optimum value is reflected in the driving position to compensate for the offset amount. The resultant value after the offset amount is reflected in the driving position is then stored as the information related to the driving position in the RAM of the electronic control unit.

Incidentally, Japanese Patent Application Publication No. 2009-216052 (JP-A-2009-216052) describes driving an actuator from one end of a driving range of the actuator to the opposite end of the driving range when performing a process to match the driving position of an actuator detected by a position sensor with an actual driving position.

Executing the initialization process described above does make it possible to match the driving position of the actuator detected by the position sensor with the actual driving position of the actuator. However, when the actuator is driven from one end of the driving range to the opposite end of the driving range in step 2 of this initialization process, the valve characteristic of the engine valve is inevitably greatly changed by the operation of the variable valve timing mechanism that occurs with this driving of the actuator. Also, this change in the valve characteristic of the engine valve will greatly affect engine operation.

EP 1669560 discloses a variable valve timing mechanism in which an error of the operational angle sensor is detected.

### SUMMARY OF THE INVENTION

This invention thus provides a variable valve timing apparatus for an internal combustion engine, and a control method of this variable valve timing apparatus, that is capable of diminishing the effect that a large change in a valve characteristic of an engine valve, that occurs when an initialization process is executed, has on engine operation when that large change occurs.

A first aspect of the invention relates to a variable valve timing apparatus for an internal combustion engine, that includes an actuator that operates a first variable valve timing mechanism that changes a valve characteristic of an engine valve; a detecting portion that detects a driving position of the actuator; and a control portion that drivingly controls the actuator within a driving range of the actuator based on the detected driving position, and executes an initialization process that matches the driving position of the actuator detected by the detecting portion with an actual driving position of the actuator only when a preset execution condition is satisfied. In the initialization process, the control portion drives the actuator to one end of the driving range and sets the driving position detected by the detecting portion in this state as an initial value, and then drives the actuator to an opposite end of the driving range that is opposite the one end of the driving range and reflects an offset amount, that is an amount that the driving position detected by the detecting portion when the actuator is driven to the opposite end is offset from an optimum value, in the driving position to compensate for the offset amount. The execution condition includes a condition that an amount of increase in acceleration required of the internal combustion engine be equal to or greater than a preset first determining value.

In the structure described above, the first variable valve timing mechanism may include a variable valve lift mechanism that is operated by the actuator and changes a maximum lift amount and an operation angle of an intake valve; and in the initialization process, the control portion may drive the actuator to an end where the maximum lift amount and the operation angle of the intake valve are smallest, as the one end of the driving range, and then drive the actuator to an end where the maximum lift amount and the operation angle of the intake valve are largest, as the opposite end of the driving range that is opposite the one end of the driving range.

In the structure described above, the variable valve timing mechanism may change the maximum lift amount and the operation angle of the intake valve in synchronization with each other by displacing a control shaft of the variable valve lift mechanism in an axial direction of the control shaft.

In the structure described above, the actuator may include an electric motor that displaces the control shaft in the axial direction.

The variable valve timing apparatus described above may also include a second variable valve timing mechanism that changes a valve characteristic of an engine valve and that is operated by a driving source other than the actuator. In this case, the second variable valve timing mechanism may include a variable intake valve timing mechanism that changes a valve timing of the intake valve and a variable exhaust valve timing mechanism that changes a valve timing of an exhaust valve. Further, the execution condition may also include a condition that an engine speed be equal to or greater than a preset second determining value and an engine load be equal to or greater than a preset third determining value, and a condition that an advance amount from a maximum retard angle of the valve timing of the intake valve be equal to or less than a preset fourth determining value, and a retard amount from a maximum advance angle of the valve timing of the exhaust valve be equal to or less than a preset fifth determining value.

In the structure described above, the control portion may adjust the valve timing of the intake valve to the maximum retard angle and adjust the valve timing of the exhaust valve to the maximum advance angle, before executing the initialization process.

In the structure described above, the execution condition may also include a condition that a change-allowing condition to allow the valve characteristic of the engine valve to be changed be satisfied.

In the structure described above, when the driving position detected by the detecting portion is a position closer to the opposite end than a sixth determining value when the execution condition is satisfied, the control portion may execute the initialization process by setting a current driving position detected by the detecting portion as the initial value of the driving position, and then driving the actuator to the opposite end of the driving range and reflecting the offset amount, that is the amount that the driving position detected by the detecting portion when the actuator is driven to the opposite end is offset from the optimum value, in the driving position to compensate for the offset amount.

In the structure described above, the sixth determining value may correspond to a center of the driving range.

A second aspect of the invention relates to a control method of a variable valve timing apparatus for an internal combustion engine. This control method includes determining whether an amount of increase in acceleration required of an internal combustion engine is equal to or greater than a preset first determining value; and executing an initialization process that matches a driving position, that is detected by a detecting portion, of an actuator that operates a variable valve timing mechanism that changes a valve characteristic of an engine valve, only when the amount of increase in the acceleration required of the internal combustion engine is equal to or greater than the first determining value. The initialization process includes drivingly controlling the actuator to drive the actuator to one end of a driving range of the actuator; detecting the driving position at the one end of the driving range by the detecting portion when the actuator has been driven to the one end of the driving range; setting the driving position at the one end of the driving range detected by the detecting portion as an initial position; drivingly controlling the actuator to drive the actuator to an opposite end of the driving range that is opposite the one end of the driving range, after setting the initial value; detecting the driving position at the opposite end of the driving range by the detecting portion when the actuator has been driven to the opposite end of the driving range; identifying an offset amount that is an amount that the driving position at the opposite end detected by the detecting portion is offset from an optimum value; and reflecting the offset amount in the driving position at the opposite end detected by the detecting portion to compensate for the offset amount.

According to the structures described above, when the valve characteristic of the engine valve greatly changes when the initialization process is executed, the effect of that change on engine operation can be diminished.

### BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:
FIG. 1 is an overall schematic diagram of an engine to which a variable valve timing apparatus according to a first example embodiment of the invention may be applied;
FIG. 2 is a timing chart showing a change in the lift amounts of an intake valve and an exhaust valve with respect to a change in the crank angle;
FIG. 3 is a timing chart showing a change in the lift amounts of the intake valve and the exhaust valve with respect to a change in the crank angle;
FIG. 4 is a timing chart showing a change in the lift amounts of the intake valve and the exhaust valve with respect to a change in the crank angle;
FIG. 5 is a flowchart illustrating an initialization process routine according to the first example embodiment; and
FIG. 6 is a flowchart illustrating an initialization process routine according to a second example embodiment of the invention.

### DETAILED DESCRIPTION OF EMBODIMENTS

### [First example embodiment]

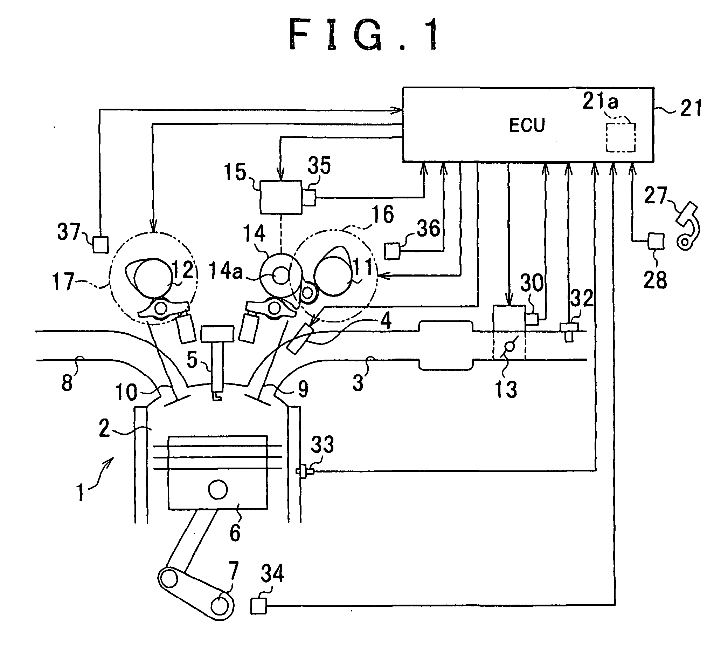

Hereinafter, a first example embodiment in which the invention is applied to a variable valve timing apparatus that varies a valve characteristic of an engine valve such as an intake valve or an exhaust valve of a vehicle engine will be described with reference to FIGS. 1 to 5.

In an engine 1 shown in FIG. 1, a throttle valve 13 is provided so as to be able to open and close in an intake passage 3 that is connected to a combustion chamber 2. Air is drawn into a cylinder through this intake passage 3 and fuel injected from a fuel injection valve 4 is supplied into the cylinder through the intake passage 3. When an air-fuel mixture formed of this air and fuel is ignited by a spark plug 5, the air-fuel mixture combusts and the force generated from the combustion drives a piston 6 back and forth, such that a crankshaft 7 that serves as an output shaft of the engine 1 rotates. The combusted air-fuel mixture in the cylinder is then discharged from the cylinder to an exhaust passage 8 as exhaust gas.

In the engine 1, communication between the combustion chamber 2 and the intake passage 3 is opened or closed by an intake valve 9 that is one engine valve of the engine 1 opening or closing. Similarly, communication between the combustion chamber 2 and the exhaust passage 8 is opened or closed by an exhaust valve 10 that is another engine valve of the engine 1 opening or closing. The intake valve 9 opens and closes with the rotation of an intake camshaft 11 that is rotated by the crankshaft 7, and the exhaust valve 10 opens and closes with the rotation of an exhaust camshaft 12 that is also rotated by the crankshaft 7.

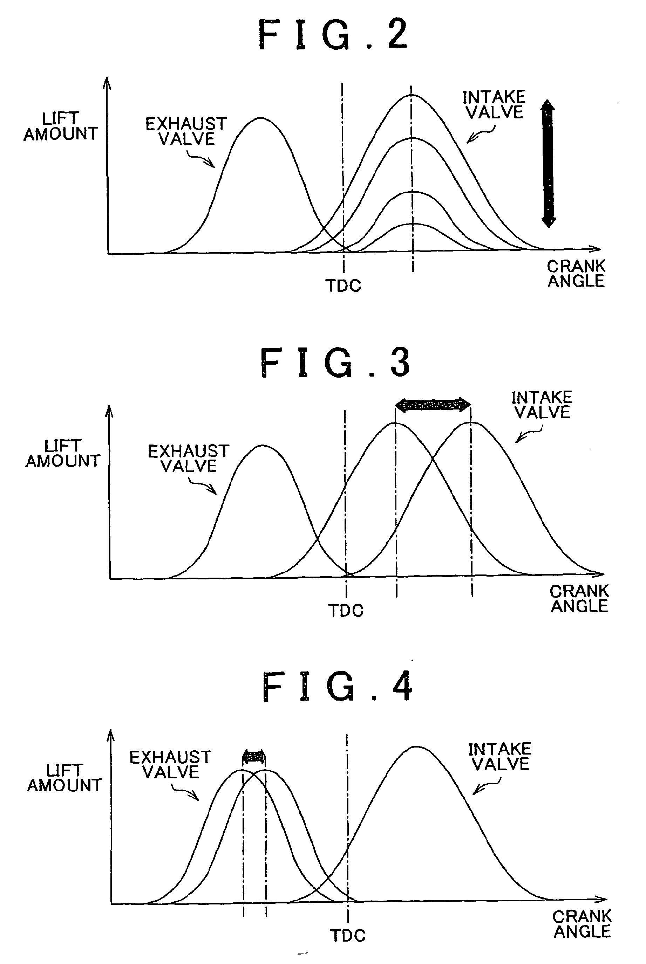

The engine 1 is provided with a variable intake valve timing mechanism 16 provided on the intake camshaft 11, and a variable valve lift mechanism 14 provided between the intake camshaft 11 and the intake valve 9. The variable intake valve timing mechanism 16 and the variable valve lift mechanism 14 are variable valve timing mechanisms that vary valve characteristics (i.e., the opening / closing characteristics) of the intake valve 9. The variable valve lift mechanism 14 changes a maximum lift amount and an operation angle of the intake valve 9 in synchronization with each other, as shown in FIG 2, by displacing a control shaft 14a of the variable valve lift mechanism 14 in the axial direction. The control shaft 14a is displaced in the axial direction by an actuator 15 that includes an electric motor and that converts the rotary motion of the electric motor within a predetermined rotation angle range to linear motion in the axial direction of the control shaft 14a. The variable intake valve timing mechanism 16 (FIG 1) is driven by a driving source other than the actuator 15. More specifically, the variable intake valve timing mechanism 16 is driven by controlling hydraulic pressure applied to the variable intake valve timing mechanism 16 via a hydraulic circuit. The variable intake valve timing mechanism 16 changes the relative rotation phase of the intake camshaft 11 (i.e., the valve timing of the intake valve 9) with respect to the crankshaft 7 by being driven. Driving the variable intake valve timing mechanism 16 in this way advances or retards the valve opening timing and the valve closing timing of the intake valve 9 while keeping the valve opening period (i.e., the operation angle) of the intake valve 9 constant, as shown in FIG 3.

The engine 1 shown in FIG 1 is also provided with a variable exhaust valve timing mechanism 17 that is provided on the exhaust camshaft 12 and that varies the relative rotation phase of the exhaust camshaft 12 with respect to the crankshaft 7. This variable exhaust valve timing mechanism 17 serves as a variable valve timing mechanism that varies a valve characteristic (i.e., an opening / closing characteristic) of the exhaust valve 10. This variable exhaust valve timing mechanism 17 is also driven by a driving source other than the actuator 15. More specifically, the variable exhaust valve timing mechanism 17 is driven by controlling the hydraulic pressure acting on it via a hydraulic circuit. Driving the variable exhaust valve timing mechanism 17 in this way advances or retards the valve opening timing and the valve closing timing of the exhaust valve 10 while keeping the valve opening period (i.e., the operation angle) of the exhaust valve 10 constant, as shown in FIG. 4.

Next, the electrical configuration of the variable valve timing apparatus of the engine 1 according to this example embodiment will be described with reference to FIG. 1. This variable valve timing apparatus includes an electronic control unit (ECU) 21 that executes various controls related to the engine 1. The ECU 21 has a CPU that executes various calculations related to the controls, ROM in which data and programs necessary for the controls are stored, RAM in which the calculation results of the CPU and the like are temporarily stored, an input port that receives signals from external devices, and an output port that outputs signals to external devices, and the like.

Various sensors and the like are connected to the input port of the ECU 21. Examples of some of these sensors are an accelerator position sensor 28, a throttle position sensor 30, an airflow meter 32, a coolant temperature sensor 33, a crank position sensor 34, a position sensor 35, an intake cam position sensor 36, and an exhaust cam position sensor 37. The accelerator position sensor 28 detects the operation amount (i.e., the accelerator operation amount) of the accelerator pedal 27 that is depressed by the driver of the vehicle.

The throttle position sensor 30 detects the opening amount (i.e., the throttle opening amount) of the throttle valve 13 provided in the intake passage 3. The airflow meter 32 detects the amount of air drawn into the combustion chamber 2 (i.e., the cylinder) through the intake passage 3.

The coolant temperature sensor 33 detects the coolant temperature of the engine 1. The crank position sensor 34 outputs a signal corresponding to the rotation of the crankshaft 7. The information in this signal is used to calculate the engine speed and the crank angle and the like.

The position sensor 35 detects the rotation angle that is a value within the predetermined rotation angle range of the electric motor of the actuator 15, as the driving position of the actuator 15. The intake cam position sensor 36 outputs a signal corresponding to the rotational position of the intake camshaft 11 based on the rotation of the intake camshaft 11.

The exhaust cam position sensor 37 outputs a signal corresponding to the rotational position of the exhaust camshaft 12 based on the rotation of the exhaust camshaft 12. Driving circuits and the like of the fuel injection valve 4, the throttle valve 13, the variable valve lift mechanism 14 (i.e., the actuator 15), the variable intake valve timing mechanism 16, and the variable exhaust valve timing mechanism 17 and the like are connected to the output port of the ECU 21.

Also, the ECU 21 ascertains the engine operating state based on the detected signals input from the various sensors, and outputs command signals to the various driving circuits that are connected to the output port according to the ascertained engine operating state. In this way, various operation controls of the engine 1, such as valve characteristic changing control, throttle opening amount control, and fuel injection quantity control of the engine 1 are executed via the ECU 21.

Incidentally, in order to precisely control the maximum lift amount and the operation angle of the intake valve 9 as the valve characteristics of the intake valve 9, it is extremely important to accurately determine the current values of the maximum lift amount and the operation angle, and operate the variable valve lift mechanism 14, i.e., drivingly control the actuator 15, such that the determined maximum lift amount and the determined operation angle come to match corresponding target values. Here, the maximum lift amount and the operation angle of the intake valve 9 correspond to the driving position in the driving range of the actuator 15, or more specifically, the operation angle in a predetermined rotation angle range of the electric motor of the actuator 15. Therefore, the current values of the maximum lift amount and the operation angle of the intake valve 9 can be determined based on the rotation angle of the electric motor of the actuator 15 detected by the position sensor 35, i.e., the driving position of the actuator 15. Incidentally, the driving position of the actuator 15 detected by the position sensor 35 (or more accurately, information related to the driving position) is stored in RAM 21a (FIG. 1) of the ECU 21. The driving position of the actuator 15 stored in the RAM 21a of the ECU 21 in this way is then read from the RAM 21a when necessary, such as when it is to be used to determine the current values of the maximum lift amount and the operation angle of the intake valve 9.

However, the information related to the driving position of the actuator 15 that is detected by the position sensor 35 and stored in the RAM 21a does not necessarily always correspond to the actual driving position of the actuator 15. That is, it may be off from the actual driving position. For example, if the information related to the driving position stored in the RAM 21a is lost and reset to the initial value as a result of a temporary interruption (a so-called an instantaneous interruption) in the supply of power to the ECU 21 or the like, or if the content of the information changes, the information related to the driving position stored in the RAM 21a will become off from the actual driving position. If the information related to the driving position stored in the RAM 21a becomes inaccurate in this way, the actual values of the maximum lift amount and the operation angle of the intake valve 9 that are determined based on the information of the driving position will also become inaccurate. In this case, if an attempt is made to control the maximum lift amount and the operation angle of the intake valve 9 to their target values by driving the actuator 15 based on the determined current values of the maximum lift amount and the operation angle of the intake valve 9, this control may not be able to be performed correctly.

Therefore, an initialization process to match the driving position of the actuator 15 detected by the position sensor 35 to the actual driving position of the actuator 15 is executed. This initialization process is performed according to steps 1 to 3 below.

### [Step 1]

The actuator 15 is driven to one end of the driving range and information related to the driving position of the actuator 15 detected by the position sensor 35 in this state, i.e., the driving position stored in the RAM 21a of the ECU 21, is set as an initial value.

### [Step 2]

The actuator 15 is driven to the opposite end of the driving range that is opposite the one end of the driving range, and an offset amount that is the amount that the driving position of the actuator 15 detected by the position sensor 35 in this state is offset from an optimum value is obtained.

### [Step 3]

The offset amount that is the amount that the detected driving position of the actuator 15 is offset from the optimum value is reflected in the driving position to compensate for the offset amount. The resultant value after the offset amount is reflected in the driving position is then stored as the information related to the driving position in the RAM 21a of the ECU 21.

Executing this initialization process makes it possible to match the driving position of the actuator 15 detected by the position sensor 35 with the actual driving position of the actuator 15.

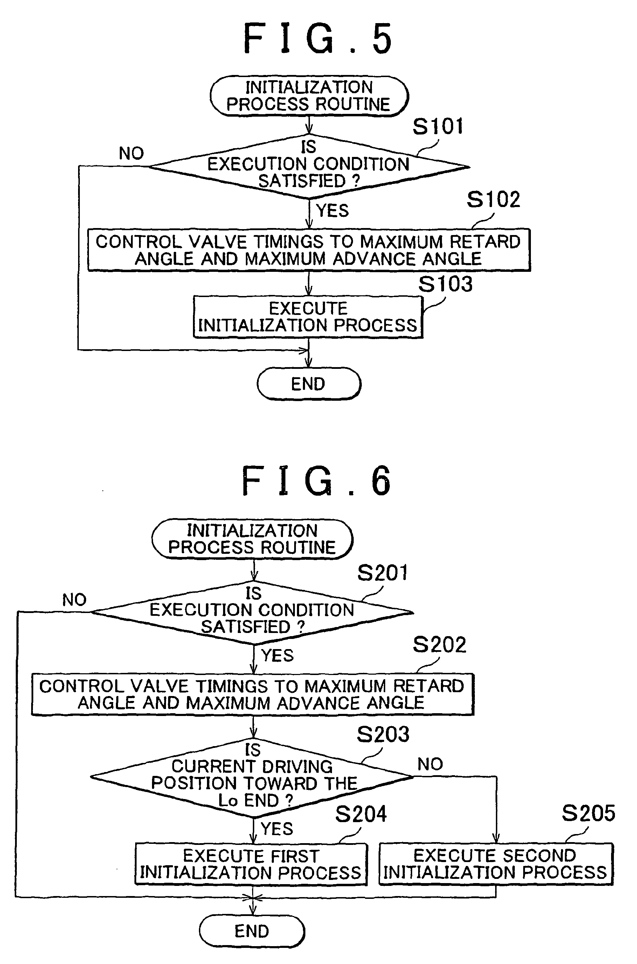

Next, the detailed steps for executing the initialization process, including the execution condition for the initialization process and the like, will now be described with reference to the flowchart in FIG. 5 that illustrates an initialization process routine. This initialization process routine is executed periodically by interruption at predetermined intervals of time, for example, by the ECU 21.

In this routine, first it is determined whether a condition for executing the initialization process, i.e., an execution condition, is satisfied (step S101). Incidentally, this execution condition is determined to be satisfied when all of conditions 1 to 4, described next, are satisfied.

### [Condition 1]

Condition 1 is satisfied when an amount of increase in acceleration required of the engine 1 (hereinafter also simply referred to as "amount of increase in the required acceleration") is equal to or greater than a preset determining value Ta. Incidentally, in this example embodiment, the amount of increase in the throttle opening amount is used as the amount of increase in the required acceleration. Also, the determining value Ta may be set to the minimum value of the amount of increase in the required acceleration at which a change in engine operation that occurs with the driving of the actuator 15 when the actuator 15 is driven from the one end of the driving range to the opposite end of the driving range according to step 2 can be regarded as relatively small with respect to a change in engine operation due to the increase in the required acceleration. In this case, the determining value Ta is set, based on testing in advance or the like, to become such a value.

### [Condition 2]

Condition 2 is satisfied when the engine speed is equal to or greater than a preset determining value Tb, and the engine load ratio is equal to or greater than a preset determining value Tc. This engine load ratio is a value that indicates the load ratio of the engine 1 that is based on the total load state of the engine 1, and is a value within a range of 0 to 100%, inclusive, according to the load of the engine 1. Incidentally, the load of the engine 1 refers to the amount of air drawn into the combustion chamber 2 per one cycle of the engine 1, and is obtained based on detection signals from various sensors such as the throttle position sensor 30, the accelerator position sensor 28, the airflow meter 32, and the crank position sensor 34. Incidentally, the determining values Tb and Tc may be set to the minimum values within a range where the combustion state of the engine 1 will not deteriorate when the actuator 15 is driven according to step 2 of the initialization process. In this case, the determining values Tb and Tc are set, based on testing in advance or the like, to become such values.

### [Condition 3]

Condition 3 is satisfied when an advance amount from the maximum retard angle of the valve timing of the intake valve 9 is equal to or less than a preset determining value Td, and the retard amount from the maximum advance angle of the valve timing of the exhaust valve 10 is equal to or less than a preset determining value Te. The advance amount from the maximum retard angle of the valve timing of the intake valve 9 is obtained based on signals output from the crank position sensor 34 and the intake cam position sensor 36. Also, the retard amount from the maximum advance angle of the valve timing of the exhaust valve 10 is obtained based on signals output from the crank position sensor 34 and the exhaust cam position sensor 37. Incidentally, the determining values Td and Te may be set to the maximum values within a range in which the combustion state of the engine 1 will not deteriorate when the actuator 15 is driven according to step 2 of the initialization process. In this case, the determining values Td and Te are set, based on testing in advance or the like, to become such values.

### [Condition 4]

Condition 4 is satisfied when a change-allowing condition to allow the valve characteristics of the intake valve 9 and the exhaust valve 10 to be changed is satisfied. When this change-allowing condition is satisfied, operation of the variable valve lift mechanism 14, the variable intake valve timing mechanism 16, and the variable exhaust valve timing mechanism 17 is allowed. On the other hand, when this change-allowing condition is not satisfied, operation of the variable valve lift mechanism 14, the variable intake valve timing mechanism 16, and the variable exhaust valve timing mechanism 17 is prohibited. It is determined that this change-allowing condition is satisfied when, for example, the coolant temperature of the engine 1 is equal to or greater than a value indicating that the engine 1 has finished warming up.

Here, if even one of these four conditions, i.e., conditions 1 to 4, is not satisfied, it is determined in step S101 that the execution condition is not satisfied. If, on the other hand, it is determined in step S101 that the execution condition is satisfied based on all of the four conditions, i.e., conditions 1 to 4, being satisfied, the valve timing of the intake valve 9 is adjusted to the maximum retard angle and the valve timing of the exhaust valve 10 is adjusted to the maximum advance angle (step S102), after which the initialization process described above is executed (step S103).

In step 2 of this initialization process, the actuator 15 is driven from one end of the driving range to the opposite end of the driving range. More specifically, the actuator 15 is driven from the end where the maximum lift amount and the operation angle of the intake valve 9 are the smallest (i.e., the Lo end) to the end where the maximum lift amount and the operation angle of the intake valve 9 are the greatest (i.e., the Hi end). Therefore, in step 1 described above, the actuator 15 is driven to the Lo end of the driving range, and information related to the driving position of the actuator 15 detected by the position sensor 35 in this state, i.e., the driving position stored in the RAM 21a of the ECU 21, is set as an initial value. Also, in step 2 described above, the actuator 15 is driven to the Hi end, the amount that the driving position of the actuator 15 detected by the position sensor 35 in this state is offset from an optimum value (i.e., the offset amount) is obtained. Then in step 3 of the initialization process, this amount that the detected driving position of the actuator 15 is offset from the optimum value is reflected in the driving position to compensate for this offset amount. For example, the detected driving position of the actuator 15 is corrected based on this offset amount. The resultant value after the offset amount is reflected (corrected) in the driving position is then stored as the information related to the driving position in the RAM 21a of the ECU 21.

With the detailed example embodiment described above, the following effects are able to be obtained.
(1) When the actuator 15 is driven from the one end (i.e., the Lo end) of the driving range to the opposite end (i.e., the Hi end) according to step 2 during the initialization process, the maximum lift amount and the operation angle of the intake valve 9 will inevitably greatly change as a result of the operation of the variable valve lift mechanism 14 that accompanies that driving of the actuator 15. Also, this change in the maximum lift amount and the operation angle of the intake valve 9 will greatly affect engine operation. However, because the execution condition of the initialization process described includes Condition 1 described above, the driving of the actuator 15 in the initialization process is performed under the condition that the amount of increase in the acceleration required of the engine 1 is equal to or greater than the determining value Ta. When the amount of increase in the acceleration required of the engine 1 is large in this way, the fluctuation in the engine operation will also be large. Therefore, even if the maximum lift amount and the operation angle of the intake valve 9 greatly change due to the driving of the actuator 15 in the initialization process, the effect from this change on the engine operation will not stand out. In other words, when the fluctuation in the engine operation becomes large as a result of an increase in the amount of increase in the acceleration required of the engine 1, the affect on the engine operation from the driving of the actuator 15 in the initialization process becomes relatively small. Accordingly, when the maximum lift amount and the operation angle of the intake valve 9 greatly change due to the actuator 15 being driven from one end of the driving range to the opposite end of the driving range during the initialization process, the affect that this change has on the engine operation can be kept small.

(2) In step 2 of the initialization process, the actuator 15 is driven from the Lo end to the Hi end of the driving range of the actuator 15. This driving of the actuator 15 operates the variable valve lift mechanism 14 in the direction that increases the maximum lift amount and the operation angle of the intake valve 9, i.e., in the direction that increases the amount of air drawn into (i.e., the intake air amount of) the engine 1. Therefore, the direction in which the engine operation changes when the intake air amount of the engine 1 rapidly increases as a result of the amount of increase in the acceleration required of the engine 1 increasing to equal to or greater than the determining value Ta is the same as the direction in which the engine operation changes when the intake air amount of the engine 1 increases due to the driving of the actuator 15 in the initialization process. Accordingly, the change in the engine operation when the amount of increase in the acceleration required of the engine 1 increases to equal to or greater than the determining value Ta makes it possible to keep the affect on the engine operation from the driving of the actuator 15 in the initialization process even smaller.

(3) The intake air amount of the engine 1 is smaller when the engine speed and the engine load ratio of the engine 1 are low. Also, when the advance amount from the maximum retard angle of the valve timing of the intake valve 9 is large and the retard amount from the maximum advance angle of the valve timing of the exhaust valve 10 is large, the valve overlap of the intake valve 9 and the exhaust valve 10 is large. Also, when the intake air amount of the engine 1 is small and the valve overlap is large, there tends to be a large amount of exhaust blowback from the combustion chamber 2 of the engine 1 into the intake passage 3. If the actuator 15 is driven in the initialization process in this engine operating state, the amount of exhaust blowback from the combustion chamber 2 of the engine 1 into the intake passage 3 would increase even more due to the increase in the valve overlap that accompanies that driving of the actuator 15. As a result, the combustion state of the engine 1 may deteriorate and adversely affect the operation of the engine 1 and the exhaust emissions.

In view of this, the execution condition of the initialization process includes conditions 2 and 3 described above. Also, if at least one of condition 2 and condition 3 is not satisfied, the initialization process will not be executed, so the actuator 15 will not be driven in the initialization process.

A state in which condition 2 described above is not satisfied refers to a state in which at least one of i) the condition that the engine speed be equal to or greater than the determining value Tb and ii) the condition that the engine load ratio be equal to or greater than the determining value Tc is not satisfied, i.e., a state in which the intake air amount of the engine 1 will decrease. Also, a state in which condition 3 described above is not satisfied refers to a state in which at least one of i) the condition that the advance amount of the valve timing of the intake valve 9 be equal to or less than the determining value Td and ii) the condition that the retard amount of the valve timing of the exhaust valve 10 be equal to or less than the determining value Te is not satisfied, i.e., an engine operating state in which the valve overlap of the intake valve 9 and the exhaust valve 10 will increase.

In these states, the actuator 15 will not be driven in the initialization process, so the exhaust blowback from the combustion chamber 2 of the engine 1 into the intake passage 3 that occurs with that driving of the actuator 15 will not increase. As a result, the combustion state of the engine 1 will not deteriorate, so there will be no adverse affect on the operation of the engine 1 and the exhaust emissions.

(4) When the execution condition is satisfied, the valve timing of the intake valve 9 is adjusted to the maximum retard angle and the valve timing of the exhaust valve 10 is adjusted to the maximum advance angle, before executing the initialization process. As a result, the valve overlap of the intake valve 9 and the exhaust valve 10 becomes the minimum value, so exhaust blowback from the combustion chamber 2 of the engine 1 into the intake passage 3 will not easily occur. Also, in such a state, the actuator 15 is driven from the Lo end to the Hi end of the driving range in the initialization process. Even though the valve overlap tends to increase with this driving of the actuator 15, the valve overlap will increase from the minimum value. Therefore, even if the valve overlap tends to increase with the driving of the actuator 15 in the initialization process, exhaust blowback from the combustion chamber 2 of the engine 1 into the intake passage 3 resulting from that increase is inhibited from becoming excessively large. Thus, deterioration of the combustion state of the engine 1 caused by this exhaust blowback is also suppressed.

(5) When there is a tendency for the valve overlap to increase with the driving of the actuator 15 in the initialization process, the valve opening timing of the intake valve 9 is advanced, and as a result, the valve 9 may contact the piston 6 of the engine 1. However, before the actuator 15 is driven, the valve timing of the intake valve 9 is adjusted to the maximum retard angle so that the valve opening timing of the intake valve 9 is retarded as much as possible. Therefore, even if the valve opening timing of the intake valve 9 is advanced due to the driving of the actuator 15, contact between the intake valve 9 and the piston 6 of the engine 1 at that time is inhibited.

(6) The execution condition of the initialization process includes condition 4 described above, i.e., that the change-allowing condition that allows the valve characteristics of the intake valve 9 and the exhaust valve 10 to be changed be satisfied. Therefore, the initialization process is executed when the change-allowing condition is satisfied, i.e., when the valve characteristics of the intake valve 9 and the exhaust valve 10 are actually able to be changed. Executing the initialization process when the valve characteristics of the intake valve 9 and the exhaust valve 10 are actually able to be changed in this way enables the driving position of the actuator 15 detected by the position sensor 35 to be more accurately matched with the actual driving position through the initialization process.

### [Second example embodiment]

Next, a second example embodiment of the invention will be described with reference to FIG. 6. FIG. 6 is a flowchart illustrating an initialization process routine of this example embodiment. In this routine, the processes (i.e., steps S201 and S202) corresponding to S101 and S102 of the initialization process routine (FIG 5) in the first example embodiment are the same as they are in the first example embodiment, while the process (i.e., steps S203 to S205) corresponding to step S103 is different than it is in the first example embodiment.

In the initialization process routine shown in FIG. 6, it is first determined whether a condition for executing the initialization process, i.e., an execution condition, is satisfied (step S201). If the determination here is yes, the valve timing of the intake valve 9 is adjusted to the maximum retard angle, and the valve timing of the exhaust valve 10 is adjusted to the maximum advance angle (step S202).

Then it is determined whether the current driving position of the actuator 15 detected by the position sensor 35 is a position closer to the Lo end than the center of the driving range of the actuator 15 (S203). If the determination here is yes, a first initialization process is executed as a process that is the same as the initialization process of the first example embodiment (step S204). If, on the other hand, the determination in step S203 is no, i.e., if it is determined that the current driving position of the actuator 15 detected by the position sensor 35 is a position closer to the Hi end than the center of the driving range of the actuator 15, a second initialization process is executed (step S205).

This second initialization process differs from the initialization process of the first example embodiment (and thus the first initialization process) only with respect to step 1, from among steps 1 to 3. More specifically, step 1a described next is executed instead of step 1 described above.

### [Step 1a]

Information related to the current driving position of the actuator 15 detected by the position sensor 35, i.e., the current driving position stored in the RAM 21a of the ECU 21, is set as it is as the initial value of the driving position.

Then, steps 2 and 3 described above are executed. As a result, information related to the driving position of the actuator 15 stored in the RAM 21a of the ECU 21 is matched with the actual driving position.

With this example embodiment, the effect described below, in addition to effects (1) to (6) of the first example embodiment, are able to be obtained.
(7) An initialization process such as that described below (i.e., the second initialization process) is executed when the current driving position of the actuator 15 detected by the position sensor 35 is a position closer to the Hi end than the determining value, e.g., when the current driving position of the actuator 15 detected by the position sensor 35 is a position closer to the Hi end than the center of the driving range. That is, information related to the current driving position of the actuator 15 detected by the position sensor 35, i.e., the driving position stored in the RAM 21a of the ECU 21, is set as it is as the initial value of the driving position. Then, the actuator 15 is driven to the Hi end, and the amount that the driving position detected by the position sensor 35 in this state is offset from an optimum value is obtained. Then this offset amount is reflected in the driving position detected by the position sensor 35 to compensate for that offset amount. In this kind of second initialization process, the actuator 15 only needs to be driven a little, so the second initialization process can be completed quickly. Executing this kind of second initialization process enables the driving position of the actuator 15 detected by the position sensor 35 to be matched with the actual driving position more quickly when this matching is performed.

### [Other example embodiments]

Incidentally, the example embodiments described above may also be modified as described below, for example. In the second example embodiment, the determination as to whether the current driving position of the actuator 15 detected by the position sensor 35 is a position that is closer to the Hi end is not limited to being a determination based on whether the current driving position of the actuator 15 detected by the position sensor 35 is a position that is closer to the Hi end than the center of the driving range of the actuator 15. For example, a determining value may be set for a position that is closer to the Lo end than the center of the driving range of the actuator 15, and it may be determined whether the current driving position of the actuator 15 is closer to the Hi end than this determining value. In this case, if the current driving position of the actuator 15 is closer to the Hi end than the determining value, it is determined that the current driving position is closer to the Hi end, so the second initialization process is executed.

In the first and second example embodiments, it is not absolutely essential that steps S101 and S202 in the initialization process routines be executed. Also, in the first and second example embodiments, the execution condition of the initialization process does not necessarily have to include condition 2 described above.

In the first and second example embodiments, the execution condition of the initialization process does not necessarily have to include condition 3 described above. Also, in the first and second example embodiments, the execution condition of the initialization process does not necessarily have to include condition 4 described above.

When driving the actuator 15 from one end of the driving range to the opposite end of the driving range in the initialization process of the first example embodiment and the first initialization process of the second example embodiment, that driving may also be from the Hi end of the driving range to the Lo end of the driving range.

In the first and second example embodiments, another parameter, such as the amount of increase of an accelerator operation amount, may be used instead of using the amount of increase in the throttle opening, as the amount of increase in the acceleration required of the engine 1.

## Claims

1. A variable valve timing apparatus for an internal combustion engine, comprising **characterized by**:
an actuator (15) that operates a first variable valve timing mechanism that changes a valve characteristic of an engine valve;
a detecting portion (35) that detects a driving position of the actuator (15) ; and
a control portion (21) that drivingly controls the actuator (15) within a driving range of the actuator (15) based on the detected driving position, and executes an initialization process that matches the driving position of the actuator (15) detected by the detecting portion (35) with an actual driving position of the actuator (15) only when a preset execution condition is satisfied, wherein
in the initialization process, the control portion (21) drives the actuator (15) to one end of the driving range and sets the driving position detected by the detecting portion (35) in this state as an initial value, and then drives the actuator (15) to an opposite end of the driving range that is opposite the one end of the driving range and reflects an offset amount, that is an amount that the driving position detected by the detecting portion (35) when the actuator is driven to the opposite end is offset from an optimum value, in the driving position to compensate for the offset amount; and
the execution condition includes a condition that an amount of increase in acceleration required of the internal combustion engine (1) be equal to or greater than a preset first determining value.

2. The variable valve timing apparatus according to claim 1, wherein
the first variable valve timing mechanism includes a variable valve lift mechanism (14) that is operated by the actuator (15) and changes a maximum lift amount and an operation angle of an intake valve (9); and
in the initialization process, the control portion (21) drives the actuator (15) to an end where the maximum lift amount and the operation angle of the intake valve (9) are smallest, as the one end of the driving range, and then drives the actuator (15) to an end where the maximum lift amount and the operation angle of the intake valve (9) are largest, as the opposite end of the driving range that is opposite the one end of the driving range.

3. The variable valve timing apparatus according to claim 2, wherein the variable valve lift mechanism (14) changes the maximum lift amount and the operation angle of the intake valve (9) in synchronization with each other by displacing a control shaft (14a) of the variable valve lift mechanism (14) in an axial direction of the control shaft (14a).

4. The variable valve timing apparatus according to claim 3, wherein the actuator (15) includes an electric motor that displaces the control shaft (14a) in the axial direction.

5. The variable valve timing apparatus according to any one of claims 2 to 4, further comprising
a second variable valve timing mechanism that changes a valve characteristic of an engine valve and that is operated by a driving source other than the actuator, wherein
the second variable valve timing mechanism includes a variable intake valve timing mechanism (16) that changes a valve timing of the intake valve (9) and a variable exhaust valve timing mechanism (17) that changes a valve timing of an exhaust valve (10); and
the execution condition further includes a condition that an engine speed be equal to or greater than a preset second determining value and an engine load be equal to or greater than a preset third determining value, and a condition that an advance amount from a maximum retard angle of the valve timing of the intake valve (9) be equal to or less than a preset fourth determining value, and a retard amount from a maximum advance angle of the valve timing of the exhaust valve (10) be equal to or less than a preset fifth determining value.

6. The variable valve timing apparatus according to claim 5, wherein the control portion (21) adjusts the valve timing of the intake valve (9) to the maximum retard angle and adjusts the valve timing of the exhaust valve (10) to the maximum advance angle, before executing the initialization process.

7. The variable valve timing apparatus according to any one of claims 1 to 6, wherein the execution condition further includes a condition that a change-allowing condition to allow the valve characteristic of the engine valve to be changed be satisfied.

8. The variable valve timing apparatus according to any one of claims 1 to 7, wherein when the driving position detected by the detecting portion (35) is a position closer to the opposite end than a sixth determining value when the execution condition is satisfied, the control portion (21) executes the initialization process by setting a current driving position detected by the detecting portion (35) as the initial value of the driving position, and then driving the actuator (15) to the opposite end of the driving range and reflecting the offset amount, that is the amount that the driving position detected by the detecting portion (35) when the actuator is driven to the opposite end is offset from the optimum value, in the driving position to compensate for the offset amount.

9. The variable valve timing apparatus according to claim 8, wherein the sixth determining value corresponds to a center of the driving range.

10. A control method of a variable valve timing apparatus for an internal combustion engine, **characterized by** comprising:
determining whether an amount of increase in acceleration required of an internal combustion engine (1) is equal to or greater than a preset first determining value; and
executing an initialization process that matches a driving position, detected by a detecting portion (35), of an actuator (15) that operates a variable valve timing mechanism that changes a valve characteristic of an engine valve, with an actual driving position of the actuator only when the amount of increase in the acceleration required of the internal combustion engine (1) is equal to or greater than the first determining value, wherein
the initialization process includes drivingly controlling the actuator (15) to drive the actuator (15) to one end of a driving range of the actuator (15); detecting the driving position at the one end of the driving range by the detecting portion (35) when the actuator (15) has been driven to the one end of the driving range; setting the driving position at the one end of the driving range detected by the detecting portion (35) as an initial value; drivingly controlling the actuator (15) to drive the actuator (15) to an opposite end of the driving range that is opposite the one end of the driving range, after setting the initial value; detecting the driving position at the opposite end of the driving range by the detecting portion (35) when the actuator (15) has been driven to the opposite end of the driving range; identifying an offset amount that is an amount that the driving position at the opposite end detected by the detecting portion (35) is offset from an optimum value; and reflecting the offset amount in the driving position at the opposite end detected by the detecting portion (35) to compensate for the offset amount.

## Patentansprüche

1. Variable Ventilsteuerungsvorrichtung für eine Brennkraftmaschine, **dadurch gekennzeichnet, dass** diese beinhaltet:
einen Aktuator (15), welcher einen ersten variablen Ventilsteuerungsmechanismus, der eine Ventilcharakteristik eines Motorventils ändert, betätigt,
einen Erfassungsabschnitt (35), welcher eine Antriebsposition des Aktuators (15) erfasst, und
einen Steuerabschnitt (21), welcher den Aktuator (15) innerhalb eines Antriebsbereiches des Aktuators (15) auf Grundlage der erfassten Antriebsposition antreibend steuert und einen Initialisierungsprozess, welcher die Antriebsposition des Aktuators (15), die durch den Erfassungsabschnitt (35) erfasst wird, mit einer tatsächlichen Antriebsposition des Aktuators (15) in Übereinstimmung bringt, nur dann ausführt, wenn eine voreingestellte Ausführungsbedingung erfüllt ist, wobei
bei dem Initialisierungsprozess der Steuerabschnitt (21) den Aktuator (15) zu einem Ende des Antriebsbereiches antreibt und die Antriebsposition, welche in diesem Zustand durch den Erfassungsabschnitt (35) erfasst wird, als einen Anfangswert einstellt, und dann den Aktuator (15) zu einem entgegen gesetzten Ende des Antriebsbereiches, welches dem einen Ende des Antriebsbereiches entgegen gesetzt ist, antreibt und einen Versatzbetrag, welcher ein Betrag ist, um welchen die Antriebsposition, die durch den Erfassungsabschnitt (35) erfasst wird, wenn der Aktuator zu dem entgegen gesetzten Ende hin angetrieben ist, von einem Optimalwert versetzt ist, in der Antriebsposition wiedergibt, um den Versatzbetrag zu kompensieren, und
die Ausführungsbedingung eine Bedingung einschließt, wonach ein Erhöhungsbetrag an Beschleunigung, der von der Brennkraftmaschine (1) benötigt ist, gleich einem voreingestellten ersten Ermittlungswert oder größer als dieser ist.

2. Variable Ventilsteuerungsvorrichtung nach Anspruch 1, wobei
der erste variable Ventilsteuerungsmechanismus einen variablen Ventilhebemechanismus (14) einschließt, welcher durch den Aktuator (15) betätigt wird und einen maximalen Hebebetrag und einen Betätigungswinkel eines Einlassventils (9) ändert, und
bei dem Initialisierungsprozess der Steuerabschnitt (21) den Aktuator (15) zu einem Ende, wo der maximale Hebebetrag und der Betätigungswinkel des Einlassventils (9) am kleinsten sind, als dem einen Ende des Antriebsbereiches antreibt und dann den Aktuator (15) zu einem Ende, wo der maximale Hebebetrag und der Betätigungswinkel des Einlassventils (9) am größten sind, als dem entgegen gesetzten Ende des Antriebsbereiches, das dem einen Ende des Antriebsbereiches entgegen gesetzt ist, antreibt.

3. Variable Ventilsteuerungsvorrichtung nach Anspruch 2, wobei der variable Ventilhebemechanismus (14) den maximalen Hebebetrag und den Betätigungswinkel des Einlassventils (9) in Synchronisation miteinander durch Verschieben einer Steuerwelle (14a) des variablen Ventilhebemechanismus (14) in einer Axialrichtung der Steuerwelle (14a) ändert.

4. Variable Ventilsteuerungsvorrichtung nach Anspruch 3, wobei der Aktuator (15) einen Elektromotor einschließt, welcher die Steuerwelle (14a) in der Axialrichtung verschiebt.

5. Variable Ventilsteuerungsvorrichtung nach einem der Ansprüche 2 bis 4, welche ferner beinhaltet
einen zweiten variablen Ventilsteuerungsmechanismus, welcher eine Ventilcharakteristik eines Motorventils ändert und welcher durch eine andere Antriebsquelle als den Aktuator betätigt wird, wobei
der zweite variable Ventilsteuerungsmechanismus einen variablen Einlassventilsteuerungsmechanismus (16), welcher eine Ventilzeitsteuerung des Einlassventils (9) ändert, und einen variablen Auslassventilsteuerungsmechanismus (17), welcher eine Ventilzeitsteuerung eines Auslassventils (10) ändert, einschließt, und
die Ausführungsbedingung ferner eine Bedingung einschließt, wonach eine Motordrehzahl gleich einem voreingestellten zweiten Ermittlungswert oder größer als dieser ist und eine Motorlast gleich einem voreingestellten dritten Ermittlungswert oder größer als dieser ist, und eine Bedingung einschließt, wonach ein Vorausbewegungsbetrag von einem maximalen Verzögerungswinkel der Ventilzeitsteuerung des Einlassventils (9) aus gleich einem voreingestellten vierten Ermittlungswert oder geringer als dieser ist und ein Verzögerungsbetrag von einem maximalen Vorausbewegungswinkel der Ventilzeitsteuerung des Auslassventils (10) aus gleich einem voreingestellten fünften Ermittlungswert oder geringer als dieser ist.

6. Variable Ventilsteuerungsvorrichtung nach Anspruch 5, wobei der Steuerabschnitt (21) vor Ausführen des Initialisierungsprozesses die Ventilzeitsteuerung des Einlassventils (9) auf den maximalen Verzögerungswinkel einstellt und die Ventilzeitsteuerung des Auslassventils (10) auf den maximalen Vorausbewegungswinkel einstellt.

7. Variable Ventilssteuerungsvorrichtung nach einem der Ansprüche 1 bis 6, wobei die Ausführungsbedingung ferner eine Bedingung einschließt, dass eine Änderungserlaubnisbedingung zum Erlauben, dass die Ventilcharakteristik des Motorventils geändert wird, erfüllt ist.

8. Variable Ventilsteuerungsvorrichtung nach einem der Ansprüche 1 bis 7, wobei, wenn die Antriebsposition, welche durch den Erfassungsabschnitt (35) erfasst wird, eine Position ist, welche dem entgegen gesetzten Ende näher als ein sechster Ermittlungswert ist, wenn die Ausführungsbedingung erfüllt ist, der Steuerungsabschnitt (21) den Initialisierungsprozess ausführt, indem eine gegenwärtige Antriebsposition, welche durch den Erfassungsabschnitt (35) erfasst wird, als der Initialwert der Antriebsposition eingestellt wird, und indem dann der Aktuator (15) zu dem entgegen gesetzten Ende des Antriebsbereiches hin angetrieben wird und der Versatzbetrag, welches der Betrag ist, um welchen die Antriebsposition, die durch den Erfassungsabschnitt (35) erfasst wird, wenn der Aktuator zu dem entgegen gesetzten Ende hin angetrieben ist, von dem Optimalwert versetzt ist, in der Antriebsposition wiedergegeben wird, um den Versatzbetrag zu kompensieren.

9. Veränderliche Ventilsteuerungsvorrichtung nach Anspruch 8, wobei der sechste Ermittlungswert einer Mitte des Antriebsbereiches entspricht.

10. Steuerverfahren einer variablen Ventilsteuerungsvorrichtung für eine Brennkraftmaschine, **dadurch gekennzeichnet, dass** dieses beinhaltet:
Ermitteln, ob ein Erhöhungsbetrag an Beschleunigung, der von einer Brennkraftmaschine (1) benötigt ist, gleich einem voreingestellten ersten Ermittlungswert oder größer als dieser ist, und
Ausführen eines Initialisierungsprozesses, welcher eine Antriebsposition, die durch einen Erfassungsabschnitt (35) erfasst wird, eines Aktuators (15), welcher einen variablen Ventilsteuerungsmechanismus, der eine Ventilcharakteristik eines Motorventils ändert, betätigt, mit einer tatsächlichen Antriebsposition des Aktuators (15) in Übereinstimmung bringt, nur dann, wenn der Erhöhungsbetrag der Beschleunigung, der von der Brennkraftmaschine (1) benötigt ist, gleich dem ersten Ermittlungswert oder größer als dieser ist, wobei
der Initialisierungsprozess beinhaltet, den Aktuator (15) antreibend zu steuern, um den Aktuator (15) zu einem Ende eines Antriebsbereiches des Aktuators (15) hin anzutreiben, die Antriebsposition an dem einen Ende des Antriebsbereiches durch den Erfassungsabschnitt (35) zu erfassen, wenn der Aktuator (15) zu dem einen Ende des Antriebsbereiches angetrieben worden ist, die Antriebsposition an dem einen Ende des Antriebsbereiches, welche durch den Erfassungsabschnitt (35) erfasst wird, als einen Initialwert einzustellen, den Aktuator (15) nach Einstellen des Initialwertes antreibend zu steuern, um den Aktuator (15) zu einem entgegen gesetzten Ende des Antriebsbereiches, welches dem einen Ende des Antriebsbereiches entgegen gesetzt ist, anzutreiben, die Antriebsposition an dem entgegen gesetzten Ende des Antriebsbereiches durch den Erfassungsabschnitt (35) zu erfassen, wenn der Aktuator (15) zu dem entgegen gesetzten Ende des Antriebsbereiches angetrieben worden ist, einen Versatzbetrag, welcher ein Betrag ist, um welchen die Antriebsposition an dem entgegen gesetzten Ende, die durch den Erfassungsabschnitt (35) erfasst wird, von einem Optimalwert versetzt ist, zu identifizieren, und den Versatzbetrag in der Antriebsposition an dem entgegen gesetzten Ende, die durch den Erfassungsabschnitt (35) erfasst wird, wiederzugeben, um den Versatzbetrag zu kompensieren.

## Revendications

1. Appareil de calage variable des soupapes pour un moteur à combustion interne, **caractérisé par** :
un actionneur (15) qui actionne un premier mécanisme de calage variable des soupapes qui modifie une caractéristique de soupape d'une soupape de moteur ;
une partie de détection (35) qui détecte une position d'entraînement de l'actionneur (15) ; et
une partie de commande (21) qui commande par entraînement l'actionneur (15) dans les limites d'une plage d'entraînement de l'actionneur (15) en fonction de la position d'entraînement détectée, et exécute un procédé d'initialisation qui fait correspondre la position d'entraînement de l'actionneur (15) détectée par la partie de détection (35) à une position d'entraînement réelle de l'actionneur (15) uniquement lorsqu'une condition d'exécution prédéterminée est satisfaite, dans lequel :
dans le procédé d'initialisation, la partie de commande (21) entraîne l'actionneur (15) jusqu'à une extrémité de la plage d'entraînement et détermine la position d'entraînement détectée par la partie de détection (35) dans cet état en tant que valeur initiale, et entraîne ensuite l'actionneur (15) jusqu'à une extrémité opposée de la plage d'entraînement qui est opposée à la première extrémité de la plage d'entraînement et reflète une quantité de décalage qui est une quantité selon laquelle la position d'entraînement détectée par la partie de détection (35) lorsque l'actionneur est entraîné vers l'extrémité opposée, est décalée par rapport à une valeur optimale, dans la position d'entraînement pour compenser la quantité de décalage ; et
la condition d'exécution comprend une condition dans laquelle une quantité d'augmentation d'accélération requise du moteur à combustion interne (1) est égale ou supérieure à une première valeur de détermination prédéterminée.

2. Appareil de calage variable des soupapes selon la revendication 1, dans lequel :
le premier mécanisme de calage variable des soupapes comprend un premier mécanisme de levée de soupape variable (14) qui est actionné par l'actionneur (15) et modifie une quantité de levée maximum et un angle de fonctionnement d'une soupape d'admission (9) ; et
dans le procédé d'initialisation, la partie de commande (21) entraîne l'actionneur (15) jusqu'à une extrémité où la quantité de levée maximum et l'angle de fonctionnement de la soupape d'admission (9) sont les plus petits, en tant que première extrémité de la plage d'entraînement, et entraîne ensuite l'actionneur (15) jusqu'à une extrémité où la quantité de levée maximum et l'angle de fonctionnement de la soupape d'admission (9) sont les plus importants, en tant qu'extrémité opposée de la plage d'entraînement qui est opposée à la première extrémité de la plage d'entraînement.

3. Appareil de calage variable des soupapes selon la revendication 2, dans lequel le mécanisme de levée de soupape variable (14) modifie la quantité de levée maximum et l'angle de fonctionnement de la soupape d'admission (9) de manière synchrone l'un par rapport à l'autre en déplaçant un arbre de commande (14a) du mécanisme de levée de soupape variable (14) dans une direction axiale de l'arbre de commande (14a).

4. Appareil de calage variable des soupapes selon la revendication 3, dans lequel l'actionneur (15) comprend un moteur électrique qui déplace l'arbre de commande (14a) dans la direction axiale.

5. Appareil de calage variable des soupapes selon l'une quelconque des revendications 2 à 4, comprenant en outre :
un second mécanisme de calage variable des soupapes qui modifie une caractéristique de soupape d'une soupape de moteur et qui est actionné par une source d'entraînement différente de l'actionneur, dans lequel :
le second mécanisme de calage variable des soupapes comprend un mécanisme de calage variable de soupape d'admission (16) qui modifie un calage de soupape de la soupape d'admission (9) et un mécanisme de calage variable de soupape d'échappement (17) qui modifie un calage de soupape d'une soupape d'échappement (10) ; et
la condition d'exécution comprend en outre une condition dans laquelle une vitesse d'un moteur est égale ou supérieure à une deuxième valeur de détermination prédéterminée et une charge d'un moteur est égale ou supérieure à une troisième valeur de détermination prédéterminée, et une condition dans laquelle une quantité d'avance d'un angle de retard maximum du calage de soupape de la soupape d'admission (9) est égale ou inférieure à une quatrième valeur de détermination prédéterminée, et une quantité de retard par rapport à un angle d'avance maximum du calage de soupape de la soupape d'échappement (10) est égale ou inférieure à une cinquième valeur de détermination prédéterminée.

6. Appareil de calage variable des soupapes selon la revendication 5, dans lequel la partie de commande (21) ajuste le calage de soupape de la soupape d'admission (9) par rapport à un angle de retard maximum et ajuste le calage de soupape de la soupape d'échappement (10) par rapport à un angle d'avance maximum, avant d'exécuter le procédé d'initialisation.

7. Appareil de calage variable des soupapes selon l'une quelconque des revendications 1 à 6, dans lequel la condition d'exécution comprend en outre une condition dans laquelle une condition d'autorisation de changement pour permettre de modifier la caractéristique de soupape de la soupape de moteur est satisfaite.

8. Appareil de calage variable des soupapes selon l'une quelconque des revendications 1 à 7, dans lequel lorsque la position d'entraînement détectée par la partie de détection (35) est une position plus proche de l'extrémité opposée qu'une sixième valeur de détermination lorsque la condition d'exécution est satisfaite, la partie de commande (21) exécute le procédé d'initialisation en réglant une position d'entraînement courante détectée par la partie de détection (35) en tant que valeur initiale de la position d'entraînement, et entraîner ensuite l'actionneur (15) vers l'extrémité opposée de la plage d'entraînement et refléter la quantité de décalage, c'est-à-dire la quantité selon laquelle la position d'entraînement détectée par la partie de détection (35) lorsque l'actionneur est entraîné vers l'extrémité opposée, est décalée par rapport à la valeur optimale, dans la position d'entraînement pour compenser la quantité de décalage.

9. Appareil de calage variable des soupapes selon la revendication 8, dans lequel la sixième valeur de détermination correspond à un centre de la plage d'entraînement.

10. Procédé de commande d'un appareil de calage variable des soupapes pour un moteur à combustion interne, comprenant les étapes consistant à :
déterminer si une quantité d'augmentation d'accélération requise d'un moteur à combustion interne (1) est égale ou supérieure à une première valeur de détermination prédéterminée ; et
exécuter un procédé d'initialisation qui fait correspondre une position d'entraînement, détectée par une partie de détection (35), d'un actionneur (15) qui actionne un mécanisme de calage variable des soupapes qui modifie une caractéristique de soupape d'une soupape de moteur, à une position d'entraînement réelle de l'actionneur uniquement lorsque la quantité d'augmentation d'accélération requise du moteur à combustion interne (1) est égale ou supérieure à la première valeur de détermination, dans lequel :
le procédé d'initialisation comprend les étapes consistant à commander par entraînement l'actionneur (15) pour entraîner l'actionneur (15) jusqu'à une extrémité d'une plage d'entraînement d'un actionneur (15) ; détecter la position d'entraînement à la première extrémité de la plage d'entraînement par la partie de détection (35) lorsque l'actionneur (15) a été entraîné jusqu'à la première extrémité de la plage d'entraînement ; régler la position d'entraînement par rapport à la première extrémité de la plage d'entraînement détectée par la partie de détection (35) en tant que valeur initiale ; commander par entraînement l'actionneur (15) pour entraîner l'actionneur (15) vers une extrémité opposée de la plage d'entraînement qui est opposée à la première extrémité de la plage d'entraînement, après avoir réglé la valeur initiale ; détecter la position d'entraînement à l'extrémité opposée de la plage d'entraînement par la partie de détection (35) lorsque l'actionneur (15) a été entraîné vers l'extrémité opposée de la plage d'entraînement ; identifier une quantité de décalage qui est une quantité selon laquelle la position d'entraînement à l'extrémité opposée détectée par la partie de détection (35) est décalée par rapport à une valeur optimale ; et refléter la quantité de décalage dans la position d'entraînement à l'extrémité opposée détectée, par la partie de détection (35) pour compenser la quantité de décalage.
